# EUROPEAN PATENT APPLICATION

(11) **EP 1 914 634 A1**
(43) Date of publication of application: **23.04.2008**
(21) Application number: 06122402.8
(22) Date of filing: 17.10.2006
(51) Int. Cl.: G06F 11/34

(54) **Usability testing of mobile device**

(71) Applicant: Sysopen Digia Oyj, 00380 Helsinki (FI)
(72) Inventor: Kölbl, Wolfgang, 01900, Nurmijärvi (FI); Pora, Heikki, 00980, Helsinki (FI); Tulonen, Kai, 02940, Espoo (FI)
(74) Representative: Pykälä, Timo Tapani

(57) **Abstract**

Usability testing of a mobile device is presented. Screen information is captured (202) from a display of a mobile device with the mobile device. User events are captured (204) from a user input device of a mobile device with the mobile device. The captured screen information and the captured user events are transferred (206) from the mobile device to a computer. The captured screen information is displayed (208) with a display of the computer. The captured user events are visualized (210) with the display of the computer.

## Description

### Field

The invention relates to a system for testing usability of a mobile device, a mobile device, a computer, a computer program, and a method for testing usability of a mobile device.

### Background

When creating new mobile devices and applications for mobile devices, the usability of such devices and applications needs to be tested by real users. When performing these tests, it is important to observe and record the user's behaviour in order to analyse and improve the quality of the product.

Currently, a video camera is used for such usability tests. The camera records the user's behaviour (key-presses made by the user, for example) and a display of device. After the recording, the information has to be processed manually, comprising generating a timed-list of events and adding screenshots to a log. Such processing is time consuming. Somebody has to analyse the logs. It is also expensive: high quality video equipment is necessary for recording the video clips. The results may be inaccurate and error-prone: it is not always possible to see from the video what the user did, which key was pressed, or where exactly on the display a mouse pointer event happened, for example.

### Brief description

The present invention seeks to provide an improved system for testing usability of a mobile device, an improved mobile device, an improved computer, an improved computer program, and an improved method for testing usability of a mobile device.

According to an aspect of the present invention, there is provided a system as specified in claim 1.

According to another aspect of the present invention, there is provided a mobile device as specified in claim 6.

According to another aspect of the present invention, there is provided a computer as specified in claim 7.

According to another aspect of the present invention, there is provided a computer program as specified in claim 8.

According to another aspect of the present invention, there is provided a method as specified in claim 9.

According to an aspect of the present invention, there is provided a mobile device as specified in claim 14.

According to another aspect of the present invention, there is provided a computer as specified in claim 15.

### List of drawings

Embodiments of the present invention are described below, by way of example only, with reference to the accompanying drawings, in which
Figure 1 illustrates embodiments of a mobile device and a computer; and
Figure 2 illustrates embodiments of a method; and
Figures 3A, 3B and 3C illustrate a sequence of user events and their effect on screen information as illustrated and visualized on a display of a computer.

### Description of embodiments

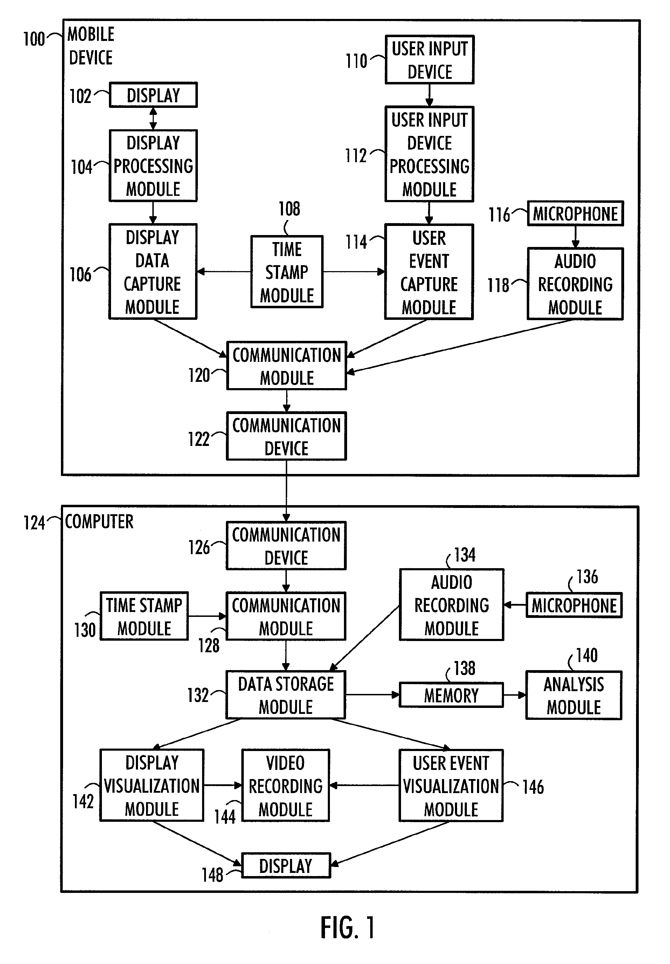

With reference to Figure 1, let us examine embodiments of a mobile device 100 and a computer 124. The mobile device 100 and the computer 124 may constitute a system for testing the usability of the mobile device 100. A user's behaviour, in the form of interaction with user input devices of the mobile device 100, may be recorded and analysed by transferring and storing user event data and screen data into a computer 124. Such usability testing of the mobile device 100 also includes usability testing of individual applications residing and executed in the mobile device 100. It is possible to automate the data collection with the system. In addition, the system allows accurate recording of events and saves costs.

The mobile device 100 refers to a portable computing device. Such computing devices include wireless mobile communication devices operating with or without a subscriber identification module (SIM), including, but not limited to, the following types of devices: mobile phone, smartphone, personal digital assistant (PDA), handset. A wireless connection may be implemented with a wireless transceiver operating according to the GSM (Global System for Mobile Communications), WCDMA (Wideband Code Division Multiple Access), WLAN (Wireless Local Area Network) or Bluetooth® standard, or another wireless communication means.

The mobile device 100 includes at least one display 102. The display 102 may be implemented with any suitable display technology. One such technology is LCD (Liquid Crystal Display). Screen information displayed on the display 102 is processed by a display processing module 104.

Besides the display(s) 102, a user interface on the mobile device 100 includes at least one user input device 110. The user input device(s) 110 may include any means to implement the user interaction, such as a touch-screen, a keyboard, a keypad, buttons, a pointing device, etc. The pointing device may be a mouse, a joystick, or a touch-sensitive pen, for example. In mobile phones having a flip-cover, the opening or closing of the flip-cover amounts to a user event. As the mobile devices 100 become more complicated, the number of necessary user input devices 110 increases as well. A mobile phone having a digital (still and/or video) camera may as a user input device have a 110 a lens-cover and additional buttons for taking the picture, etc. The user events obtained from the user input device(s) 110 are processed by a user input device processing module 112.

For usability testing, the mobile device 100 further comprises a display data capture module 106 configured to capture screen information from the display 102 of the mobile device 100, and a user event capture module 114 configured to capture user events from the user input device 110.

The screen information refers to any information displayed on the display 102 of the mobile device 100 and processed by the display processing module 104. The display data capture module 106 may capture the screen information from the display processing module 104. The display data capture module 106 may package the screen information into a transport format. The display data capture module 106 may utilize ImageExpo by SysOpen Digia. ImageExpo is a tool for Symbian OS based phones displaying the screen of the phone on a computer screen.

The user events include the following: keys pressed, time between key-presses (how long does the user need to figure out which key to press), keys released, number of key-presses needed to perform a certain action, other user events, like mouse events, pen events, flip-cover open or close events, camera commands, internal information about what happens in the mobile device 100, etc. The user event capture module 114 may capture the user events from the user input device processing module 112.

The mobile device 100 also comprises a communication device 122, and a communication module 120 configured to transfer the captured screen information and the captured user events to the computer 124 with the communication device 122 of the mobile device 100. The communication device 122 may include any means, wired or wireless, implementing data communication between two devices. Such means include a Bluetooth transceiver, Universal Serial Bus (USB) device, a TCP/IP (Transmission Control Protocol /Internet Protocol) device, a WLAN (Wireless Local Area Network) device, etc. The previously mentioned communication means function almost in real-time, i.e. a transfer delay between the mobile device 100 and the computer 124 is quite small. If real-time operation is not needed, other kind of communication means may be used as well: a memory device (such as a USB Flash, for example) may be used to carry the information from the mobile device 100 to the computer 124.

The computer 124 may be an electronic digital computer, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

The computer 124 further comprises a display 148, and a communication device 126. The display 148 may be implemented with any suitable display technology. Currently, the LCD technology is dominating. The communication device 126 is implemented such that it is able to realize the communication with the communication device 122 of the mobile device 100. Therefore, the computer also comprises a communication module 128 configured to receive the captured screen information and the captured user events from the mobile device 100 with the communication device 126 of the computer 124.

The computer 124 also comprises a display visualization module 142 configured to display the captured screen information with the display 148 of the computer 124, and a user event visualization module 146 configured to visualize the captured user events with the display 148 of the computer 124.

The system may further comprise a time stamp module 108/130 configured to time stamp the captured screen information and the captured user events. As shown in Figure 1, the time stamp module 108/130 may reside either in the mobile device 100 or in the computer 124. The time stamp module 108/130 may utilize a clock circuit with which to measure the time. The display visualization module 142 and the user events visualization module 146 utilize the time stamped screen information and the captured user events so that the order and duration of each individual occurrence may be precisely re-created.

The computer 124 may further comprise a memory 138, and a data storage module 132 configured to store the captured screen information and the captured user events in the memory 138. This embodiment allows for a later analysis of the stored data. The computer 124 may comprise an analysis module 140 for the purpose. The analysis module 140 may analyse the captured user events stored in textual form. The analysis module 140 may also analyse the differences between different versions of the product tested.

The computer 124 may further comprise a video recording module 144 configured to record the display of the captured screen information with the display 148 of the computer 124 and the visualization of the captured user events with the display 148 of the computer 124. The video recording is an illustrated account of the usability testing. The video recording may be played back in slow-motion in order to be able to view the details of the user's actions. Alternatively, the playback of the video recording may also be sped-up in order to find a certain action of the user faster.

The system may further comprise an audio recording module 118/134 configured to record audio during the usability testing. As illustrated in Figure 1, the audio recording module 118/134 may reside either in the mobile device 100 or in the computer 124, and utilize a microphone 116 of the mobile device 100 or a microphone 136 of the computer 124. The recorded audio may include the user's voice, i.e. the user may comment on the screen information and the use of the user input device 110.

Interfaces between the various modules may be implemented with suitable interface technologies, such as a message interface, a method interface, a sub-routine call interface, a block interface, or any means enabling communication between functional sub-units.

An embodiment provides a computer program comprising program instructions which, when loaded into the mobile device 100 and the computer 124, constitute at least some of the modules 106, 108, 114, 118, 120, 128, 130, 132, 134, 142, 144, and 146.

The computer program may be in source code form, object code form, or in some intermediate form, and it may be stored in some sort of carrier, which may be any entity or device capable of carrying the program. Such carriers include a record medium, a computer memory, a read-only memory, an electrical carrier signal, a telecommunications signal, and a software distribution package, for example. Depending on the processing power needed, the computer program may be executed in a single computer 124 or it may be distributed amongst a number of computers, and it may be executed in a single processor of the mobile device 100, or it may be distributed amongst a number of processors of the mobile device 100.

Some or all of the modules 104, 106, 108, 112, 114, 118, and 120 may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the mobile device 100, necessary processing capacity, production costs, and production volumes, for example.

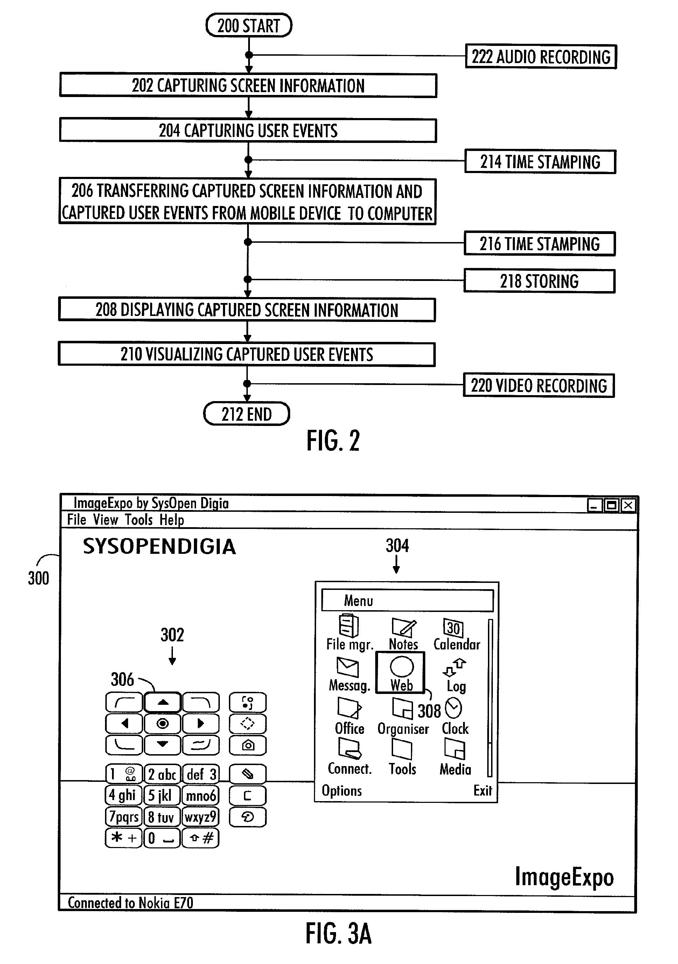

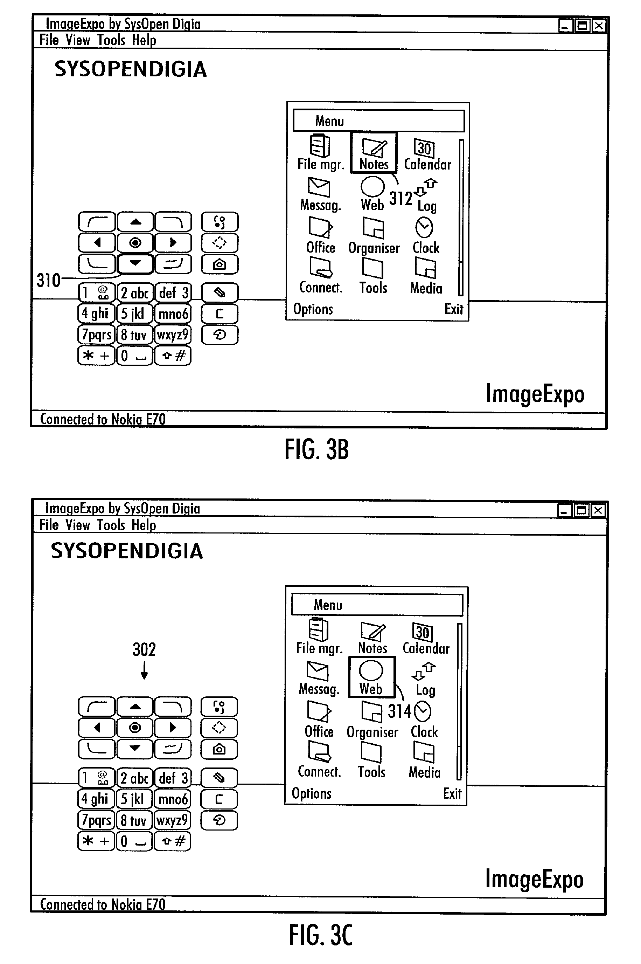

Figures 3A, 3B and 3C illustrate a sequence of user events and their effect on screen information as illustrated and visualized on a display 300 of the computer 124.

The display visualization module 142 displays captured screen information 304, and a user event visualization module 146 visualizes captured user events 302. In Figure 3A, the captured user events 302 are illustrated as a keyboard of the mobile device 100, and a pressing of key 306 is shown by marking a key 306 with a bolded border. In general, the pressing of keys may be visualized by highlighting pressed keys or printing key information, and operation of other user input devices 110 by showing special icons, for example.

In Figure 3A, the captured screen information 304 is shown as a window including the display of the mobile device 100, and a selected application 308 is shown by encircling it with a cursor.

In Figure 3B, the cursor has moved from the "Web" to "Notes" 312, as the "Up" key was pressed previously as illustrated in Figure 3A. In Figure 3B, a pressing of "Down" key 310 is visualized.

In response to the pressing of the "Down" key, the cursor has moved to the application "Web" 314 in Figure 3C. No more user events are captured, so the keyboard area 302 does not illustrate any key pressing in Figure 3C.

Embodiments of a method for testing usability of a mobile device will be described next with reference to Figure 2. The method starts in 200.

In 202, screen information is captured from a display of a mobile device with the mobile device. In 204, user events are captured from a user input device of the mobile device with the mobile device. The captured screen information and the captured user events are transferred from the mobile device to a computer in 206.

In 208, the captured screen information is displayed with a display of the computer. In 210, the captured user events are visualized with the display of the computer.

In an embodiment, the captured screen information and the captured user events may be time stamped; this may take place before operation 206 or after it, as illustrated with reference signs 214 and 216.

In order to be able to analyse the usability after the actual testing, the captured screen information and the captured user events may be stored in 218, and/or the display of the captured screen information with the computer display and the visualization of the captured user events with the computer display may be video recorded in 220. The storage and the video recordings also enables results of consecutive iterations to be compared; this allows possible quality and usability changes between different versions of the mobile device 100 and/or different versions of an application residing in the mobile device 100 to be analysed. Furthermore, audio may be recorded during the usability testing in 222.

In 212, the method is ended when the testing is ready. Before this, the operations 202, 204, 206, 208, 210, 214, 216, 218, 220 and 222 may be repeated as many times as necessary. It should be noted that no special order of operations is required in the method. For example : the capture 202 of the screen information and the capture 204 of the user events may be performed in reverse order, or even in parallel. Correspondingly, the display 208 of the captured screen information and the visualization 210 of the user events may be performed in reverse order, or in parallel. The previously described details of the mobile device 100 and the computer 124 may be applied to the method as well.

Even though the invention has been described above with reference to an example according to the accompanying drawings, it is clear that the invention is not restricted thereto but it can be modified in several ways within the scope of the appended claims.

## Claims

1. A system for testing usability of a mobile device, comprising:
a mobile device comprising a display, a user input device, a communication device, a display data capture module configured to capture screen information from the display of the mobile device, a user event capture module configured to capture user events from the user input device, and a communication module configured to transfer the captured screen information and the captured user events to a computer with the communication device of the mobile device; and
a computer comprising a display, a communication device, a communication module configured to receive the captured screen information and the captured user events from the mobile device with the communication device of the computer, a display visualization module configured to display the captured screen information with the display of the computer, and a user event visualization module configured to visualize the captured user events with the display of the computer.

2. The system of claim 1, wherein the system further comprises a time stamp module configured to time stamp captured screen information and the captured user events.

3. The system of any preceding claim, wherein the computer further comprises a memory and a data storage module configured to store the captured screen information and the captured user events in the memory.

4. The system of any preceding claim, wherein the computer further comprises a video recording module configured to record the display of the captured screen information with the display of the computer and the visualization of the captured user events with the display of the computer.

5. The system of any preceding claim, wherein the system further comprises an audio recording module configured to record audio during the usability testing.

6. A mobile device of any preceding claim.

7. A computer of any preceding claim 1 to 5.

8. A computer program comprising program instructions which, when loaded into the mobile device and the computer, constitute the modules of any preceding claim 1 to 5.

9. A method for testing usability of a mobile device, comprising:
capturing screen information from a display of a mobile device with the mobile device;
capturing user events from a user input device of the mobile device with the mobile device;
transferring the captured screen information and the captured user events from the mobile device to a computer;
displaying the captured screen information with a display of the computer; and
visualizing the captured user events with the display of the computer.

10. The method of claim 9, further comprising:
time stamping the captured screen information and the captured user events.

11. The method of claim 9 or 10, further comprising:
storing the captured screen information and the captured user events.

12. The method of any preceding claim 9 to 11, further comprising:
video recording the display of the captured screen information with the computer display and the visualization of the captured user events with the computer display.

13. The method of any preceding claim 9 to 12, further comprising:
recording audio during the usability testing.

14. A mobile device comprising means for capturing screen information, means for capturing user events, and means for transferring the captured screen information and the captured user events to a computer.

15. A computer comprising means for receiving captured screen information and captured user events from a mobile device, means for displaying the captured screen information, and means for visualizing the captured user events.
